# EUROPEAN PATENT SPECIFICATION

(11) **EP 4 315 801 B1**
(45) Date of publication and mention of the grant of the patent: **31.12.2025**
(21) Application number: 22717903.3
(22) Date of filing: 24.03.2022
(51) Int. Cl.: H04L 65/612, H04L 65/752, H04L 65/75, H04L 65/80

(54) **PLUNGER FOR FASTER VIDEO STREAM RECOVERY**
KOLBEN FÜR SCHNELLERE VIDEOSTROMRÜCKGEWINNUNG
PISTON POUR RÉCUPÉRATION PLUS RAPIDE DE FLUX VIDÉO

(30) Priority: 26.03.2021 US 202163166321 P
(43) Date of publication of application: 07.02.2024
(73) Proprietor: Telefonaktiebolaget LM Ericsson (publ), 164 83 Stockholm (SE)
(72) Inventor: LYNAM, Jonathan, San Jose, California 95113 (US); ERNSTROM, Lars, Mountain View, California 94043 (US); WITTENBERG, Joel L., El Cerrito, California 94530 (US)
(74) Representative: Koitel, Raivo
(86) International application number: PCT/IB2022/052731
(87) International publication number: WO 2022/201105

(56) References cited:
- FR-A1- 2 820 917

## Description

### TECHNICAL FIELD

The present disclosure relates, in general, to wireless communications and, more particularly, systems and methods providing a plunger for faster video stream recovery.

### BACKGROUND

Real-time video streaming includes delivery of video content with low end-to-end latency from a server to a client. The server has a video encoder, and the client has a video decoder. Real-time video applications include cloud gaming, remote driving/flying, and some high-quality telepresence and teleconferencing applications. With real-time video, it is important to maintain low latency and prevent freezing (stalling) of the video stream, even in the presence of network congestion, interruptions, packet loss, poor quality radio links, etc. Certain trade-offs are made to help ensure low latency and prevent freezing. This may be referred to as ensuring stream continuity.

Video compression operates on two major principles: 1) efficient encoding of blocks of pixels (known as macroblocks) and 2) re-use of duplicate/similar macroblocks between frames. Typically, in a video stream, much of the current picture, or video frame, is identical to the previous video frame. Thus, to compress a video frame, the encoder will record, on a block-by-block basis, how to reuse macroblocks from previous frame(s), possibly adjusting their position on the screen (using a motion vector), and contributing any new macroblocks. The re-use of parts from previous video frames creates a natural dependency in the video stream. To decompress the video stream, the decoder needs access to the previous video frame. Without the previous (or otherwise referenced) frame, all references to it from the current frame's motion vectors will not be valid.

There currently exist certain challenges, however. For example, considering real-time transport of video as a system, the sequential frame-to-frame dependency means that if one video frame is lost, corrupted, or only partially delivered in transport across the network, problems arise in decoding the video stream. Either the lost frame will need to be retransmitted by the server, or there should be some means to reconstruct the lost frame through redundancy in the video stream, or the video stream should be "restarted" very quickly to maintain continuity. Failing any one of these, either a partial or total loss of the video stream would occur. In a typical usage context, this would normally be evident to the user either as corruption of the picture or as freezing of the stream.

To summarize, because of the nature of video compression, video frames typically have a dependency on previous video frames. When video frames (or their constituent packets) are lost in transit (with no way to reconstruct them at the client), the video stream cannot continue without error/imperfections. The client application may choose between stalling the video to restart/recover the video stream or continuing to decode video as-is, possibly showing corrupted video.

With a real-time video stream, when packet loss or excessive network delay is experienced, the video stream becomes "stalled" as video frames are not received by the client (player) in time to be displayed to the end user. The examples described herein consider specifically the case where the radio link is the link (on the end-to-end path from server to client) where the packet loss or delay is experienced. When the radio link degrades in this way, the effective transmission bitrate from base station to user equipment (UE) is lowered. Typically, this will result in delaying (queueing) all subsequent video frames. Even when the radio link recovers and returns to regular transmission bitrate, there will often be a number of video frames queued at the base station that may be far too old (or late) to play at the client. These are referred to as stale frames. Generally, it is preferable to skip to the latest video frame sent by the server.

Regarding skipping stale frames, applications using real-time video streaming are latency sensitive by definition, and usually involve remote control or interaction. Consider cloud gaming or remotely steering a car. If there is a temporary network disruption delaying the video, when the disruption ends, it will generally be favorable to resume showing the latest video frame from the server instead of lagging behind persistently.

When the server detects frame loss and its software makes a decision to recover the video stream, it will send a special video frame, referred to as a recovery frame for simplicity. In practice, this will often be an Instantaneous Decoder Refresh (IDR) frame that the decoder can fully decode without reference to any previous frame, so it can essentially be considered the first frame of a new (recovered) video stream, and video frames can follow it as in normal operation.

A problem with this solution is that any packet forwarding node on the path from server to client may still be buffering stale frames when the recovery frame is sent. Buffering frames means the node is buffering packets that constitute a video frame. Video frames can typically be 5-50 packets long, depending on the codec and its configuration. This will cause the recovery frame to be queued (and, thus, blocked) behind the stale frames, slowing down the recovery process. However, since the stale frames are old and it is too late to be play them, ideally, they would not even be sent to the client at all. Unfortunately though, a radio base station does not have any way to determine by itself whether a given packet is part of a stale video frame. Thus, the base station cannot discard such packets without additional instructions from the application.

The general problem of packet queues filling up and causing packet delay is known as bufferbloat, though the term does not necessarily signify the presence of stale frames. Any new packet entering such a queue must wait its turn ("sojourn") behind its antecedents until its turn to be transmitted.

A family of techniques known as Active Queue Management (AQM) seek to limit bufferbloat. They either operate through marking or dropping packets in an attempt to shrink buffers that are consistently very full. Since either the markings or dropping of packets would be noticed by the over-the-top application, the over-the-top application is then expected to down-regulate its transmission rate. If the AQM tends to drop packets at or near the front of the queue, it has the effect of removing stale video frames. However, AQM does not generally have specific knowledge of video streaming setup. Depending on the precise timing of events of a network fluctuation and recovery, the AQM can result in only partially dropping stale video frames (only some of the packet or frames) or even dropping too many packets, including one or more packets constituting the recovery frame, which would force recovery to begin again. In general, AQM is not (and probably should not be) well-coordinated with the specifics of the real-time video streaming application. In summary, AQM is often an excellent general solution for most types of application traffic on the Internet, but for video streaming the video streamer should have more explicit control of clearing buffers in a way that keeps a base station's implementation very simple.

FR 2 820 917 describes a method for switching data packets between a multiplicity of communications links, of the type implemented with a switching device with means for memorizing data packets to be transmitted along each link. When a disconnection is detected, a specific data packet is stored in memory, called a restart packet, such that when the link is reconnected, packet transmission can be restarted in a correct manner.

### SUMMARY

Certain aspects of the present disclosure and their embodiments may provide solutions to these or other challenges. For example, according to certain embodiments, systems and methods are disclosed for providing a plunger for faster video stream. More particularly, according to certain embodiments, systems and methods include a packet marking on a recovery frame that indicates to a network node that queued in front of the recovery frame should be removed.

According to certain embodiments, a method performed by a base station includes receiving a data stream comprising a sequence of packets and detecting a packet of the sequence of packets is a restart packet. The base station determines that one or more packets of the sequence of packets is buffered for transmission in front of the restart packet. The base station removes the one or more packets in front of the restart packet from the buffer and transmits the restart packet and at least one packet in the sequence of packets that follows the restart packet.

According to certain embodiments, a method by a video server for transmitting a data stream includes transmitting, to a base station, a data stream comprising a sequence of packets. The video server determines that the data stream needs to be restarted and indicates a packet of the sequence of packets as a restart packet. The video server transmits, to the base station the restart packet and at least one packet in the sequence of packets that follows the restart packet.

According to certain embodiments, a base station is adapted to receive a data stream comprising a sequence of packets and detecting a packet of the sequence of packets is a restart packet. The base station is adapted to determine that one or more packets of the sequence of packets is buffered for transmission in front of the restart packet. The base station is adapted to remove the one or more packets in front of the restart packet from the buffer and transmit the restart packet and at least one packet in the sequence of packets that follows the restart packet.

According to certain embodiments, a video server is adapted to transmit, to a base station, a data stream comprising a sequence of packets. The video server is adapted to determine that the data stream needs to be restarted and indicates a packet of the sequence of packets as a restart packet. The video server is adapted to transmit, to the base station the restart packet and at least one packet in the sequence of packets that follows the restart packet.

Certain embodiments may provide one or more of the following technical advantages. For example, certain embodiments may provide a technical advantage of minimizing the network-related time delay required with restarting a video stream.

As another example, certain embodiments may provide a technical advantage of allowing an application to explicitly control when a buffer of a base station (or other intermediate node such as, for example a router or a switch) is cleared such as when one or more links on the end-to-end network path experience temporary fluctuations, congestion, loss, excess delay, etc. There are many network applications, real-time video streaming being one, where this is relevant. In particular, the technical advantages may be most relevant to applications that require low latency and have a preference for "up-to-date" information (e.g., newest video frame) even if this comes at the cost of loss of some (i.e.,. stale) information.

As another example, certain embodiments described herein may be well adapted for implementation at a radio base station that is the last network "hop" where the packet queueing and plunger-initiated discarding could take place before the radio link. The radio link is usually the link (on the path from server to client) where severe fluctuations will occur, which might require the video stream to be restarted/recovered. The radio link is also often the "bottleneck" link causing a buildup in packet queues (bufferbloat).

Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an example operation of a recovery frame, according to certain embodiments;
FIGURE 2 illustrates an example wireless network, according to certain embodiments;
FIGURE 3 illustrates an example network node, according to certain embodiments;
FIGURE 4 illustrates an example wireless device, according to certain embodiments;
FIGURE 5 illustrate an example user equipment, according to certain embodiments;
FIGURE 6 illustrates a virtualization environment in which functions implemented by some embodiments may be virtualized, according to certain embodiments;
FIGURE 7 illustrates a telecommunication network connected via an intermediate network to a host computer, according to certain embodiments;
FIGURE 8 illustrates a generalized block diagram of a host computer communicating via a base station with a user equipment over a partially wireless connection, according to certain embodiments;
FIGURE 9 illustrates a method implemented in a communication system, according to one embodiment;
FIGURE 10 illustrates another method implemented in a communication system, according to one embodiment;
FIGURE 11 illustrates another method implemented in a communication system, according to one embodiment;
FIGURE 12 illustrates another method implemented in a communication system, according to one embodiment;
FIGURE 13 illustrates an example method by according to certain embodiments; and
FIGURE 14 illustrates an example method by , according to certain embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to alan/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Although particular problems and solutions may be described using new radio (NR) terminology, it should be understood that the same solutions apply to long term evolutions (LTE) and other wireless networks as well, where applicable.

Some embodiments described herein may satisfy some or all of the following requirements. For example, certain embodiments operate to clear out any stale video frame that was sent before the recovery frame so that stale frames are not sent to the client. As another example, certain embodiments expedite delivery of the recovery frame. In some embodiments, most of the specific details of the video streaming, frame dependencies, etc., only need to be understood by the application, not the network. Rather, the network node implements just a simple mechanism.

According to certain embodiments, a special packet marking is defined and is added to, for example, the first packet of a recovery frame. The special packet marking indicates to the base station (or other packet forwarding node) to clear packets queued ahead of the marked packet. In a particular embodiment, the special packet marking may indicate to the base station or other network node that all packets queued ahead of the market packet that also have similar descriptors to the marked packet should be cleared since the packets that exhibit these similar descriptors are of the same flow. As used herein, the packet marking system and techniques may be referred to as "plunger" marking.

In a particular embodiment, when the base station or other network node reads a packet that is marked as a plunger, the base station searches the packet queue associated with the specific UEs session that the plunger packet is destined for. If any packet has the same source address, destination address, source port (UDP port), and destination port, for example, the base station can assume that such packet is part of the same video flow and discard the packet. In so doing, stale video frames are cleared out, and the recovery frame will be the next frame to be delivered.

Some embodiments may use additional or other methods for associating a packet with a video flow. For example, some particular embodiments may include the network node inspecting other header fields such a protocol type for the packet marking. In still other embodiments, the network node may check for labels or quality of service (QoS) indicators.

In some embodiments, the plunging action results in a partial video frame being delivered such as, for example, if some packets of a stale video frame have already been transmitted and then a plunger packet arrives. In this scenario, the remaining packets of the stale video frame will be discarded instead of sent. To the client, this will look like missing packets of a video frame. The client must be able to accommodate this without catastrophic failure.

The plunger marking can be implemented in several different ways. For example, certain embodiments may mark different fields of packet headers. As another example, some embodiments may use the IPv4 or IPv6 differentiated services code point DSC field, with the specific binary value of 101111 (decimal: 47), which conventionally indicates a traffic class of Expedited Forwarding (low latency, high priority) and Experimental. The DSCP is a 6-bit subfield of IPv4 and IPv6 headers, generally used for marking packets to associate them with particular traffic classes and thus suggest how such packets should be treated by packet forwarding nodes on an IP network. In various embodiments, the specific markings may be configured or programmed to be in agreement between the radio base station and the video streaming server/client.

According to certain embodiments, the server is free to use the plunger marking at its own discretion and according to its own choice of algorithm. As an illustrative example of such an algorithm, in a particular embodiment, the server may decide to recover the video stream (using plunger marking, etc.) when it experiences a timeout while waiting for an acknowledgement from the client that a video frame has been received. In other words, every time the server sends a video frame, it expects to receive an acknowledgement message from the client indicating the successful reception of the frame. The server may choose the timeout duration such that it is a multiple (e.g., 2x) of the expected round-trip time (server -> client -> server), which in turn would be learned dynamically when video streaming begins and continually updated as acknowledgements are received. However, this is merely an example; it is recognized that a server may use any suitable heuristics to determine when to use the plunger marking.

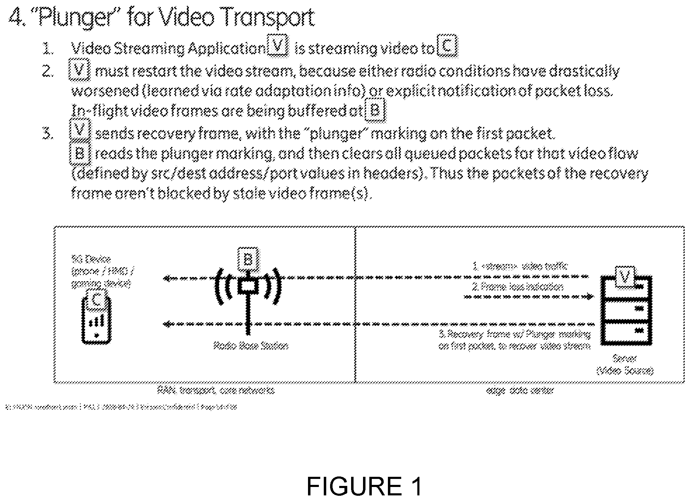

FIGURE 1 is a sequence diagram illustrating an example operation of a recovery frame, according to certain embodiments. As depicted, C represents the 5G Device such as a phone, HMD, and/or gaming device. V represents the video source such as a server which provides the video stream to C. B represents the radio base station that operates to forward the video stream from V to C.

More specifically, video streaming application V is streaming video to consumer C, at step 1. At step 2, V determines to restart the video stream. The determination may be based on rate adaptation information (e.g., the radio conditions have changed, lowering the bit rate of the channel). In some embodiments, V may receive an explicit notification of packet loss. While the determination to restart the video stream is being made, in-flight video frames are buffered at base station B.

At step 3, V sends a recovery frame with the plunger marking on the first packet of the recovery frame. B is monitoring all incoming packets for a recovery frame marking and detects the recovery frame according to any of the embodiments and examples described above. Based on the recovery frame marking, B clears all the queued packets for the video stream (e.g., defined source/destination address and port values or other label). Thus, the packets of the recovery frame are not blocked behind the stale video frame(s).

While the above examples describe plunging operations at a base station transmitting video in the downlink direction, any node along the video stream may monitor for the plunger marking and take subsequent action based on detection of the plunger marking.

Particular embodiments are also applicable for the uplink direction. For example, a wireless device may include a video camera and may be live streaming video in the uplink direction. If the wireless device detects a change in uplink bandwidth, the wireless device may determine to send a recovery frame with a plunger marking. The base station make detect the plunger marking and remove stale frames. As another example, the wireless device may have a dedicated chip set for transmitting video. The video chip set may detect the plunger marking and clear stale frames before transmitting on the uplink.

Some embodiments may apply to streams other than video streams. For example, a wireless device may stream position data for augmented, extended, or virtual reality environments. The location information is also time sensitive and benefits from flushing stale packets. Particular embodiments apply to any stream that is time sensitive and may be susceptible to fluctuating data rates.

To summarize the advantages, particular embodiments facilitate a faster recovery, because the recovery frame does not sojourn as long in the queue, blocked behind stale video frames. Additionally, the stale video frames are never sent, which is appropriate because they are not useful to playback anyway. An additional advantage is that during recovery the radio link may still be in a partially degraded state. The stale video frame(s) that would be cleared are likely to have been encoded with a target bitrate corresponding to the radio link transmission bitrate from when the radio link was in a healthy state. Thus, the stale frames may be much larger than the video frames of the new/recovered stream (the recovery frame and subsequent frames). Because the stale frames are much larger, if they were sent then they would consume the radio link's capacity for a longer time, resulting in much slower recovery of the video stream.

Another advantage of particular embodiments is that the decision of when to clear out stale video frames is up to the video streaming server. There are many ways to configure the video streaming, with multiple sub-streams, redundancy, recovery schemes, etc. A simple system like AQM cannot accommodate or have specific knowledge of many of them. The server can make its own decision of when it is likely a good idea to clear out stale frames.

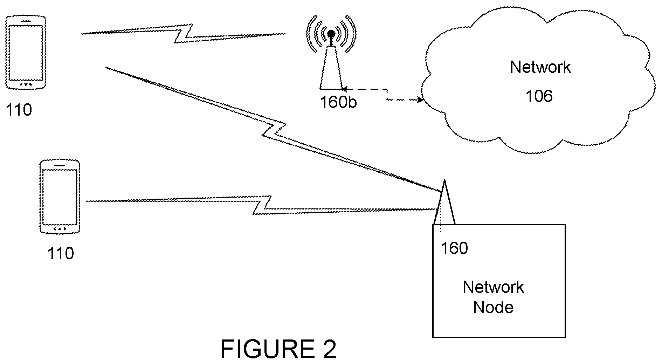

FIGURE 2 illustrates a wireless network in accordance with some embodiments. Although the subject matter described herein may be implemented in any appropriate type of system using any suitable components, the embodiments disclosed herein are described in relation to a wireless network, such as the example wireless network illustrated in FIGURE 2. For simplicity, the wireless network of FIGURE 2 only depicts network 106, network nodes 160 and 160b, and wireless devices (WDs) 110. In practice, a wireless network may further include any additional elements suitable to support communication between wireless devices or between a wireless device and another communication device, such as a landline telephone, a service provider, or any other network node or end device. Of the illustrated components, network node 160 and WD 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

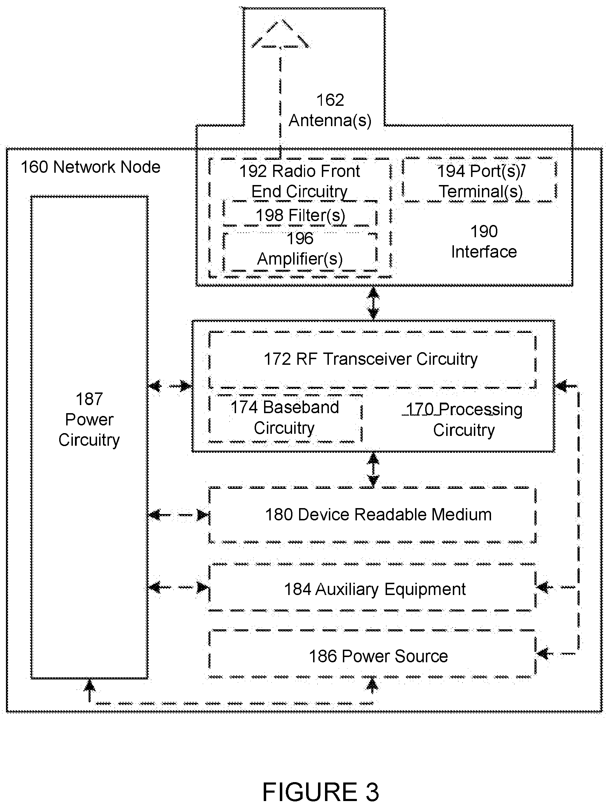

FIGURE 3 illustrates an example network node 160, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 3, network node 160 includes processing circuitry 170, device readable medium 180, interface 190, auxiliary equipment 184, power source 186, power circuitry 187, and antenna 162. Although network node 160 illustrated in the example wireless network of FIGURE 3 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units.

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 3 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

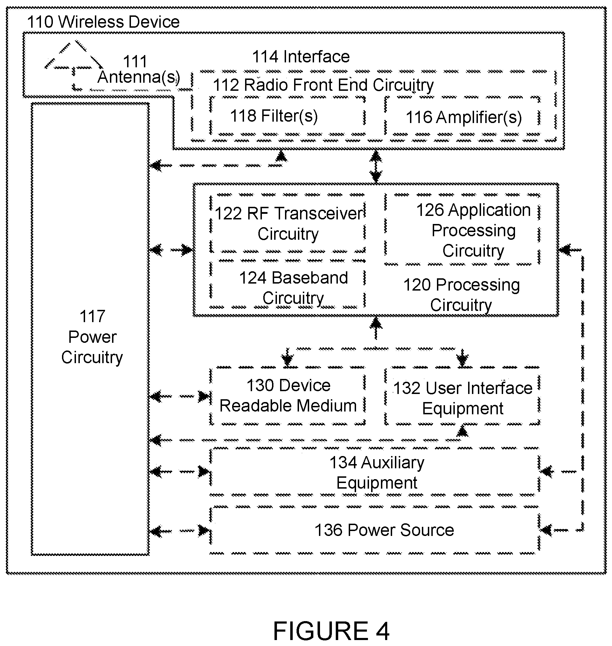

FIGURE 4 illustrates an example WD 110, according to certain embodiments. As used herein, WD refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

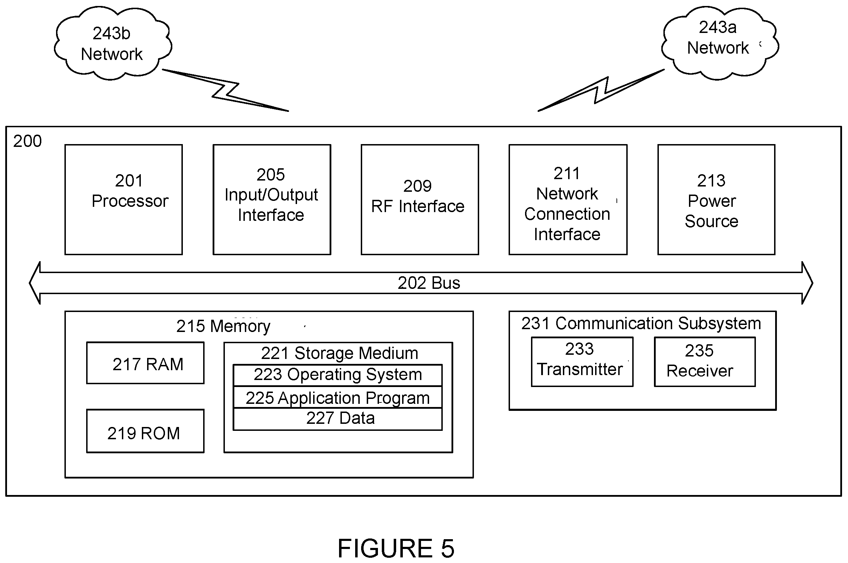

FIGURE 5 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 5, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 5 is a UE, the components discussed herein are equally applicable to a WD, and vice-versa.

In FIGURE 5, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 5, or only a subset of the components. The level of integration between the components may vary from one UE to another UE. Further, certain UEs may contain multiple instances of a component, such as multiple processors, memories, transceivers, transmitters, receivers, etc.

In FIGURE 5, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 5, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 5, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

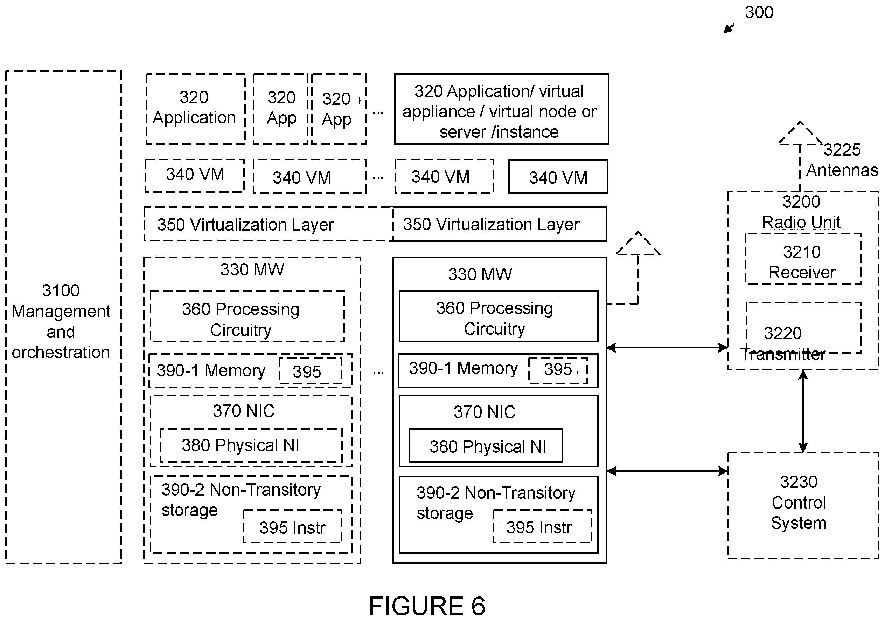

FIGURE 6 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 6, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 6.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

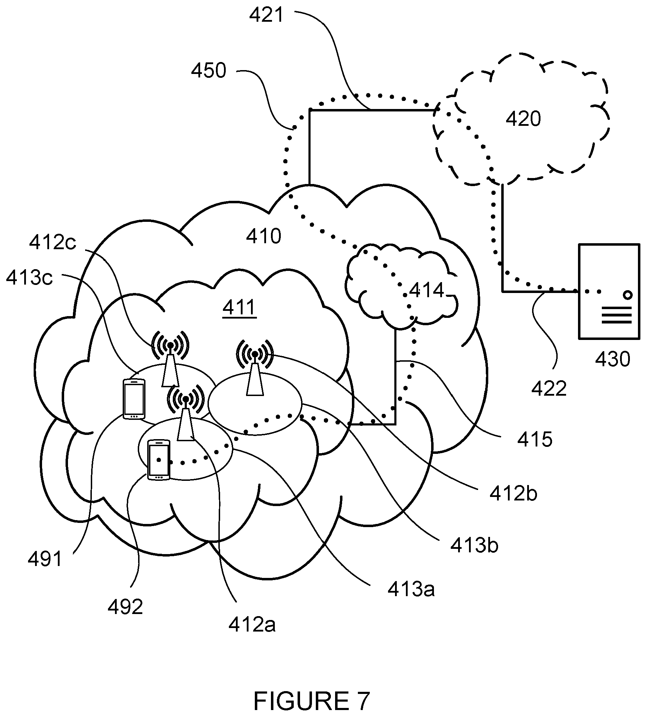

FIGURE 7 illustrates an example telecommunication network connected via an intermediate network to a host computer in accordance with some embodiments.

With reference to FIGURE 7, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 7 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

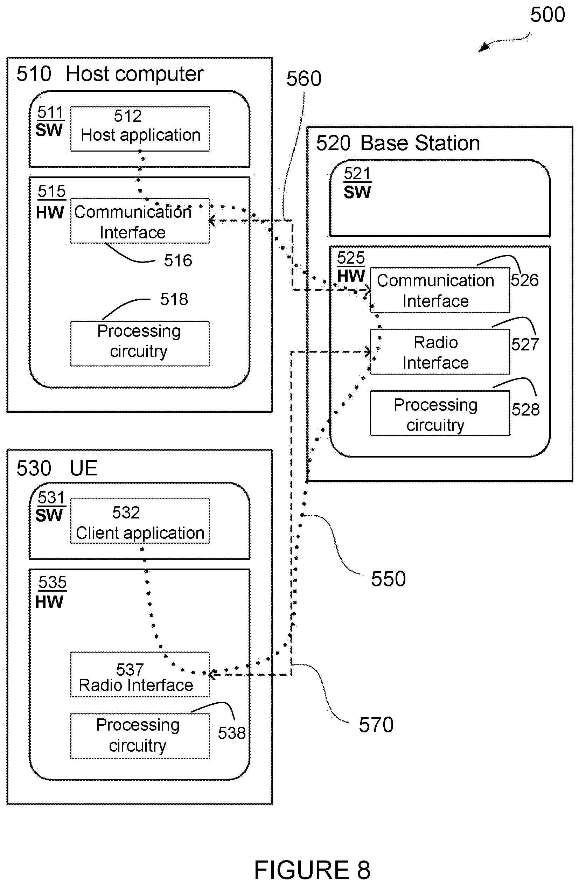

FIGURE 8 illustrates a host computer communicating via a base station with a user equipment over a partially wireless connection in accordance with some embodiments. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 8) served by base station 520. Communication interface 526 may be configured to facilitate connection 560 to host computer 510. Connection 560 may be direct or it may pass through a core network (not shown in FIGURE 8) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 8 may be similar or identical to host computer 430, one of base stations 412a, 412b, 412c and one of UEs 491, 492 of FIGURE 7, respectively. This is to say, the inner workings of these entities may be as shown in FIGURE 8 and independently, the surrounding network topology may be that of FIGURE 7.

In FIGURE 8, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

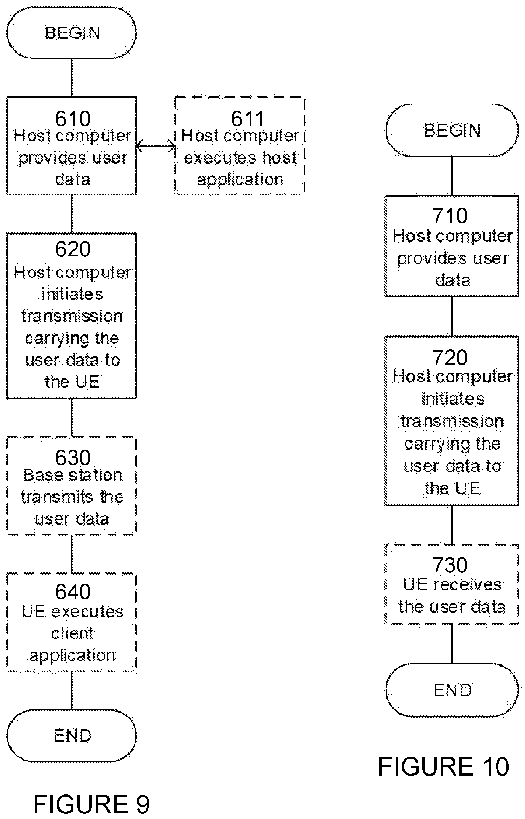

FIGURE 9 is a flowchart illustrating a method implemented in a communication system, in accordance with one embodiment. The communication system includes a host computer, a base station and a UE which may be those described with reference to FGURES 7 and 8. For simplicity of the present disclosure, only drawing references to FIGURE 9 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 10 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 10 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

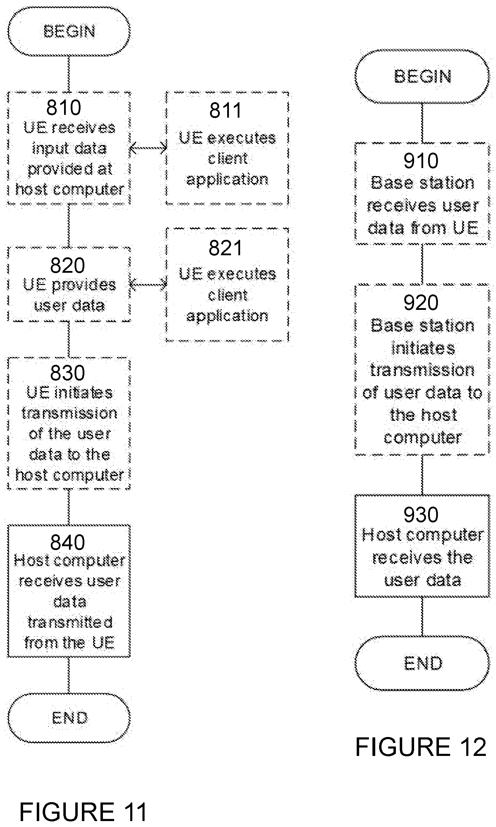

FIGURE 11 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 11 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 12 is a flowchart illustrating a method implemented in a communication system, in accordance with one embodiment. The communication system includes a host computer, a base station and a UE which may be those described with reference to FIGURES 7 and 8. For simplicity of the present disclosure, only drawing references to FIGURE 12 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

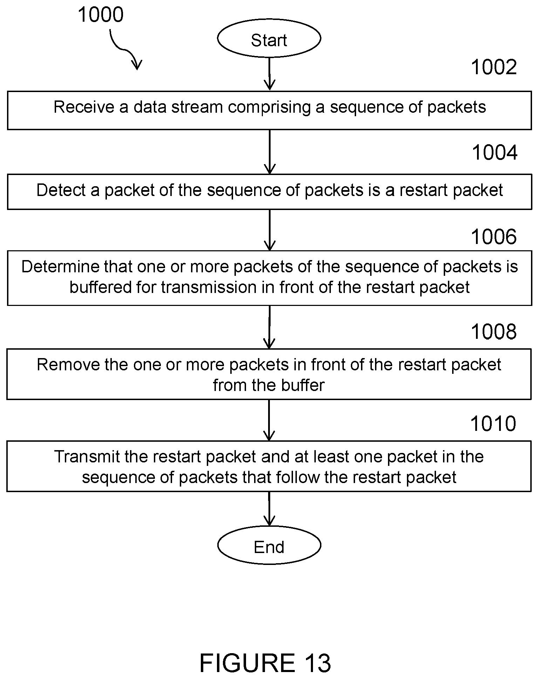

FIGURE 13 illustrates a method 1000 performed by a base station for transmitting a data stream, according to certain embodiments. The method begins at step 1002 when the base station receives a data stream comprising a sequence of packets. At step 1004, the base station detects a packet of the sequence of packets is a restart packet. At step 1006, the base station determines that one or more packets of the sequence of packets is buffered for transmission in front of the restart packet. At step 1008, the base station removes the one or more packets in front of the restart packet from the buffer. At step 1010, the base station transmits the restart packet and at least one packet in the sequence of packets that follows the restart packet.

In a particular embodiment, the data stream comprises a video stream.

In a particular embodiment, the sequence of packets is associated with a flow.

In a particular embodiment, detecting that the packet of the sequence of packets is the restart packet comprises detecting that the packet is marked as the restart packet.

In a particular embodiment, detecting that the packet of the sequence of packets is marked as the restart packet comprises identifying a field in an IP header of the restart packet that indicates that the restart packet is the restart packet.

In a particular embodiment, the field comprises a differentiated services code point field, QCI indicator, or a 5QI indicator.

In a particular embodiment, detecting that the packet of the sequence of packets is the restart packet comprises receiving, from a video server, a message indicating that the packet is the restart packet.

In a particular embodiment, the message comprises a packet identifier that is associated with the restart packet.

In a particular embodiment, determining that one or more packets of the sequence of packets is buffered for transmission in front of the restart packet comprises identifying the one or more packets buffered for transmission that include at least one value that is similar to at least one value of the restart packet.

In a particular embodiment, the at least one value comprises at least one of: a source address, a destination address, a source port, a destination port, a protocol type, and a quality of service indication.

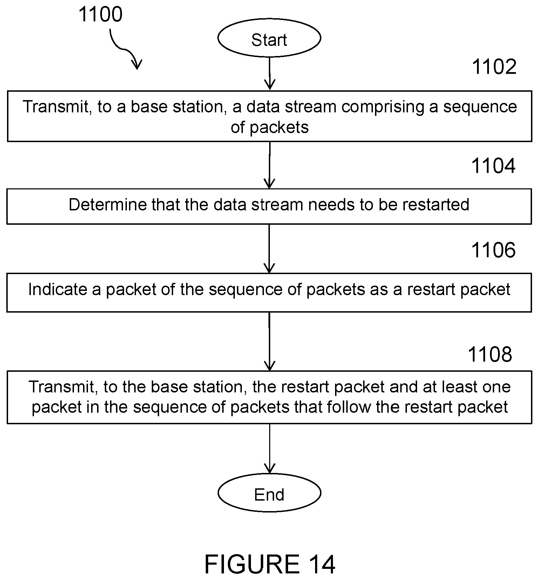

FIGURE 14 illustrates a method 1100 performed by a video server for transmitting a data stream, according to certain embodiments. The method begins at step 1102 when the video server transmits, to a base station, a data stream comprising a sequence of packets. At step 1104, the video server determines that the data stream needs to be restarted. At step 1106, the video server indicates a packet of the sequence of packets as a restart packet. At step 1108, the video server transmits, to the base station the restart packet and at least one packet in the sequence of packets that follows the restart packet.

In a particular embodiment, the data stream comprises a video stream.

In a particular embodiment, the sequence of packets is associated with a flow.

In a particular embodiment, indicating the packet of the sequence of packets as the restart packet comprises marking the packet as the restart packet.

In a further particular embodiment, marking the packet as the restart packet comprises modifying a field in an IP header of the restart packet to indicate that the packet is the restart packet.

In a further particular embodiment, the field comprises a differentiated services code point field, QCI indicator, or a 5QI indicator.

In a particular embodiment, indicating the packet of the sequence of packets as the restart packet comprises transmitting, to a network node, a message indicating that the packet is the restart packet.

In a particular embodiment, the message comprises a packet identifier that is associated with the restart packet.

In a particular embodiment, the video server receives, from the base station, a message acknowledging that the base station has received the data stream comprising the sequence of packets. The video server determines that the data stream needs to be restarted based on a time when the message is received.

In a particular embodiment, determining that the data stream needs to be restarted is based on at least one of: frame loss or packet loss; a change in data throughput rate of the data stream; a reduction in signal quality; a detection that a buffer includes an amount of data above a maximum threshold; and a reduction in bandwidth.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method (1000) performed by a base station (B) for transmitting a data stream in a wireless network, the method comprising:
receiving from a video server a data stream comprising a sequence of packets (1002);
detecting a packet of the sequence of packets is a restart packet (1004);
determining that one or more packets of the sequence of packets is buffered for transmission in front of the restart packet (1006);
removing the one or more packets in front of the restart packet from the buffer (1008);
and transmitting to a user equipment the restart packet and at least one packet in the sequence of packets that follows the restart packet (1010).

2. The method (1000) of Claim 1, wherein the data stream comprises a video stream.

3. The method of Claims 1 or 2, wherein detecting that the packet of the sequence of packets is the restart packet (1004) comprises receiving, from a video server, a message indicating that the packet is the restart packet.

4. The method (1000) of any one of Claims 1 to 3, wherein determining that one or more packets of the sequence of packets is buffered for transmission in front of the restart packet (1006) comprises identifying the one or more packets buffered for transmission that include at least one value that is similar to at least one value of the restart packet.

5. A method (1100) performed by a video server for transmitting a data stream in a wireless network, the method comprising:
transmitting, to a base station, a data stream comprising a sequence of packets (1102);
determining that the data stream needs to be restarted (1104);
indicating a packet of the sequence of packets as a restart packet (1106); and
transmitting, to the base station the restart packet and at least one packet in the sequence of packets that follows the restart packet (1108).

6. The method (1100) of Claim 5, wherein indicating the packet of the sequence of packets as the restart packet (1106) comprises transmitting, to a network node, a message indicating that the packet is the restart packet.

7. The method (1100) of any one of Claims 5 or 6, further comprising receiving, from the base station, a message acknowledging that the base station has received the data stream comprising the sequence of packets, and wherein determining that the data stream needs to be restarted is based on a time when the message is received.

8. The method (1100) of any one of Claims 5 to 7, wherein determining that the data stream needs to be restarted (1104) is based on at least one of:
frame loss or packet loss;
a change in data throughput rate of the data stream;
a reduction in signal quality;
a detection that a buffer includes an amount of data above a maximum threshold; and
a reduction in bandwidth.

9. A base station (B) for transmitting a data stream in a wireless network, the base station (B) adapted to:
receive from a video server a data stream comprising a sequence of packets (1002);
detect a packet of the sequence of packets is a restart packet (1004);
determine that one or more packets of the sequence of packets is buffered for transmission in front of the restart packet (1006);
remove the one or more packets in front of the restart packet from the buffer (1008);
and transmit to a user equipment the restart packet and at least one packet in the sequence of packets that follows the restart packet (1010).

10. The base station (B) of Claim 9, wherein the data stream comprises a video stream.

11. The base station (B) of Claim 9 or 10, wherein when detecting that the packet of the sequence of packets is the restart packet (1004) the base station is adapted to receive, from a video server (V), a message indicating that the packet is the restart packet.

12. The base station (B) of any one of Claims 9 to 11, wherein when determining that one or more packets of the sequence of packets is buffered for transmission in front of the restart packet (1006) the base station (B) is adapted to identify the one or more packets buffered for transmission that include at least one value that is similar to at least one value of the restart packet.

13. A video server (V) for transmitting a data stream in a wireless network, the video server (V) adapted to:
transmit, to a base station (B), a data stream comprising a sequence of packets (1102);
determine the data stream needs to be restarted (1104);
indicate a packet of the sequence of packets as a restart packet (1106); and
transmit, to the base station (B), the restart packet and at least one packet in the sequence of packets that follows the restart packet (1108).

14. The video server (V) of Claim 13, wherein when indicating the packet of the sequence of packets as the restart packet (1106) the video server is adapted to transmit, to a network node, a message indicating that the packet is the restart packet.

15. The video server (V) of Claim 13 or 14, adapted to receive, from the base station (B), a message acknowledging that the base station has received the data stream comprising the sequence of packets, and wherein determining that the data stream needs to be restarted is based on a time when the message is received.

## Patentansprüche

1. Ein Verfahren (1000), das von einer Basisstation (B) durchgeführt wird, zum Übertragen eines Datenstroms in einem drahtlosen Netzwerk, wobei das Verfahren Folgendes beinhaltet:
Empfangen, von einem Videoserver, eines Datenstroms, der eine Sequenz von Paketen beinhaltet (1002),
Detektieren, dass ein Paket der Sequenz von Paketen ein Neustartpaket ist (1004);
Bestimmen, dass ein oder mehrere Pakete der Sequenz von Paketen zur Übertragung vor dem Neustartpaket gepuffert sind (1006);
Entfernen des einen oder der mehreren Pakete vor dem Neustartpaket aus dem Puffer (1008); und
Übertragen, an ein Benutzergerät, des Neustartpakets und mindestens eines Pakets in der Sequenz von Paketen, das auf das Neustartpaket folgt (1010).

2. Verfahren (1000) gemäß Anspruch 1, wobei der Datenstrom einen Videostrom beinhaltet.

3. Verfahren gemäß Anspruch 1 oder 2, wobei das Detektieren, dass das Paket der Sequenz von Paketen das Neustartpaket ist (1004), das Empfangen, von einem Videoserver, einer Nachricht beinhaltet, die anzeigt, dass das Paket das Neustartpaket ist.

4. Verfahren (1000) gemäß einem der Ansprüche 1 bis 3, wobei das Bestimmen, dass ein oder mehrere Pakete der Sequenz von Paketen zur Übertragung vor dem Neustartpaket gepuffert sind (1006), das Identifizieren des einen oder der mehreren zur Übertragung gepufferten Pakete beinhaltet, die mindestens einen Wert umfassen, der mindestens einem Wert des Neustartpakets ähnlich ist.

5. Ein Verfahren (1100), das von einem Videoserver durchgeführt wird, zum Übertragen eines Datenstroms in einem drahtlosen Netzwerk, wobei das Verfahren Folgendes beinhaltet:
Übertragen, an eine Basisstation, eines Datenstroms, der eine Sequenz von Paketen beinhaltet (1102);
Bestimmen, dass der Datenstrom neu gestartet werden muss (1104);
Anzeigen eines Pakets der Sequenz von Paketen als ein Neustartpaket (1106); und
Übertragen, an die Basisstation, des Neustartpakets und mindestens eines Pakets in der Sequenz von Paketen, das auf das Neustartpaket folgt (1108).

6. Verfahren (1100) gemäß Anspruch 5, wobei das Anzeigen des Pakets der Sequenz von Paketen als das Neustartpaket (1106) das Übertragen, an einen Netzwerkknoten, einer Nachricht beinhaltet, die anzeigt, dass das Paket das Neustartpaket ist.

7. Verfahren (1100) gemäß einem der Ansprüche 5 oder 6, das ferner das Empfangen, von der Basisstation, einer Nachricht beinhaltet, die bestätigt, dass die Basisstation den Datenstrom empfangen hat, der die Sequenz von Paketen beinhaltet, und wobei das Bestimmen, dass der Datenstrom neu gestartet werden muss, auf einer Zeit basiert, zu der die Nachricht empfangen wird.

8. Verfahren (1100) gemäß einem der Ansprüche 5 bis 7, wobei das Bestimmen, dass der Datenstrom neu gestartet werden muss (1104), auf mindestens einem von Folgendem basiert:
Rahmenverlust oder Paketverlust;
einer Änderung der Datendurchsatzrate des Datenstroms;
einer Verringerung der Signalqualität;
einer Detektion, dass ein Puffer eine Menge von Daten über einem maximalen Schwellenwert umfasst; und
einer Verringerung der Bandbreite.

9. Eine Basisstation (B) zum Übertragen eines Datenstroms in einem drahtlosen Netzwerk, wobei die Basisstation (B) für Folgendes angepasst ist:
Empfangen, von einem Videoserver, eines Datenstroms, der eine Sequenz von Paketen beinhaltet (1002);
Detektieren, dass ein Paket der Sequenz von Paketen ein Neustartpaket ist (1004);
Bestimmen, dass ein oder mehrere Pakete der Sequenz von Paketen zur Übertragung vor dem Neustartpaket gepuffert sind (1006);
Entfernen des einen oder der mehreren Pakete vor dem Neustartpaket aus dem Puffer (1008); und
Übertragen, an ein Benutzergerät, des Neustartpakets und mindestens eines Pakets in der Sequenz von Paketen, das auf das Neustartpaket folgt (1010).

10. Basisstation (B) gemäß Anspruch 9, wobei der Datenstrom einen Videostrom beinhaltet.

11. Basisstation (B) gemäß Anspruch 9 oder 10, wobei, wenn detektiert wird, dass das Paket der Sequenz von Paketen das Neustartpaket ist (1004), die Basisstation angepasst ist, um von einem Videoserver (V) eine Nachricht zu empfangen, die anzeigt, dass das Paket das Neustartpaket ist.

12. Basisstation (B) gemäß einem der Ansprüche 9 bis 11, wobei, wenn bestimmt wird, dass ein oder mehrere Pakete der Sequenz von Paketen zur Übertragung vor dem Neustartpaket gepuffert sind (1006), die Basisstation (B) angepasst ist, um das eine oder die mehreren zur Übertragung gepufferten Pakete zu identifizieren, die mindestens einen Wert umfassen, der mindestens einem Wert des Neustartpakets ähnlich ist.

13. Ein Videoserver (V) zum Übertragen eines Datenstroms in einem drahtlosen Netzwerk, wobei der Videoserver (V) für Folgendes angepasst ist:
Übertragen, an eine Basisstation (B), eines Datenstroms, der eine Sequenz von Paketen beinhaltet (1102);
Bestimmen, dass der Datenstrom neu gestartet werden muss (1104);
Anzeigen eines Pakets der Sequenz von Paketen als ein Neustartpaket (1106); und
Übertragen, an die Basisstation (B), des Neustartpakets und mindestens eines Pakets in der Sequenz von Paketen, das auf das Neustartpaket folgt (1108).

14. Videoserver (V) gemäß Anspruch 13, wobei, wenn das Paket der Sequenz von Paketen als das Neustartpaket angezeigt wird (1106), der Videoserver angepasst ist, um an einen Netzwerkknoten eine Nachricht zu übertragen, die anzeigt, dass das Paket das Neustartpaket ist.

15. Videoserver (V) gemäß Anspruch 13 oder 14, der angepasst ist, um von der Basisstation (B) eine Nachricht zu empfangen, die bestätigt, dass die Basisstation den Datenstrom empfangen hat, der die Sequenz von Paketen beinhaltet, und wobei das Bestimmen, dass der Datenstrom neu gestartet werden muss, auf einer Zeit basiert, zu der die Nachricht empfangen wird.

## Revendications

1. Un procédé (1000) réalisé par une station de base (B) pour transmettre un flux de données dans un réseau sans fil, le procédé comprenant :
le fait de recevoir, d'un serveur vidéo, un flux de données comprenant une séquence de paquets (1002) ;
le fait de détecter qu'un paquet de la séquence de paquets est un paquet de reprise (1004) ;
le fait de déterminer qu'un ou plusieurs paquets de la séquence de paquets est mis en mémoire-tampon pour transmission devant le paquet de reprise (1006) ;
le fait de retirer de la mémoire-tampon (1008) les un ou plusieurs paquets devant le paquet de reprise ; et
le fait de transmettre à un équipement utilisateur le paquet de reprise et au moins un paquet dans la séquence de paquets qui suit le paquet de reprise (1010).

2. Le procédé (1000) de la revendication 1, où le flux de données comprend un flux vidéo.

3. Le procédé de la revendication 1 ou de la revendication 2, où le fait de détecter que le paquet de la séquence de paquets est le paquet de reprise (1004) comprend le fait de recevoir, d'un serveur vidéo, un message indiquant que le paquet est le paquet de reprise.

4. Le procédé (1000) de l'une quelconque des revendications 1 à 3, où le fait de déterminer qu'un ou plusieurs paquets de la séquence de paquets est mis en mémoire-tampon pour transmission devant le paquet de reprise (1006) comprend le fait d'identifier les un ou plusieurs paquets mis en mémoire-tampon pour transmission qui incluent au moins une valeur qui est similaire à au moins une valeur du paquet de reprise.

5. Un procédé (1100) réalisé par un serveur vidéo pour transmettre un flux de données dans un réseau sans fil, le procédé comprenant :
le fait de transmettre, à une station de base, un flux de données comprenant une séquence de paquets (1102) ;
le fait de déterminer que le flux de données doit être repris (1104) ;
le fait d'indiquer un paquet de la séquence de paquets comme étant un paquet de reprise (1106) ; et
le fait de transmettre, à la station de base, le paquet de reprise et au moins un paquet dans la séquence de paquets qui suit le paquet de reprise (1108).

6. Le procédé (1100) de la revendication 5, où le fait d'indiquer le paquet de la séquence de paquets comme étant le paquet de reprise (1106) comprend le fait de transmettre, à un nœud de réseau, un message indiquant que le paquet est le paquet de reprise.

7. Le procédé (1100) de l'une quelconque des revendications 5 ou 6, comprenant en outre le fait de recevoir, de la station de base, un message accusant réception du fait que la station de base a reçu le flux de données comprenant la séquence de paquets, et où le fait de déterminer que le flux de données doit être repris est basé sur un instant auquel le message est reçu.

8. Le procédé (1100) de l'une quelconque des revendications 5 à 7, où le fait de déterminer que le flux de données doit être repris (1104) est basé sur au moins un élément parmi :
une perte de trame ou une perte de paquet ;
un changement de vitesse de débit de données du flux de données ;
une réduction de qualité de signal ;
une détection qu'une mémoire-tampon inclut une quantité de données au-dessus d'un seuil maximal ; et
une réduction de bande passante.

9. Une station de base (B) pour transmettre un flux de données dans un réseau sans fil, la station de base (B) étant adaptée à :
recevoir, d'un serveur vidéo, un flux de données comprenant une séquence de paquets (1002) ;
détecter qu'un paquet de la séquence de paquets est un paquet de reprise (1004) ;
déterminer qu'un ou plusieurs paquets de la séquence de paquets est mis en mémoire-tampon pour transmission devant le paquet de reprise (1006) ;
retirer de la mémoire-tampon (1008) les un ou plusieurs paquets devant le paquet de reprise ; et
transmettre à un équipement utilisateur le paquet de reprise et au moins un paquet dans la séquence de paquets qui suit le paquet de reprise (1010).

10. La station de base (B) de la revendication 9, où le flux de données comprend un flux vidéo.

11. La station de base (B) de la revendication 9 ou de la revendication 10, où, lorsqu'il est détecté que le paquet de la séquence de paquets est le paquet de reprise (1004), la station de base est adaptée à recevoir, d'un serveur vidéo (V), un message indiquant que le paquet est le paquet de reprise.

12. La station de base (B) de l'une quelconque des revendications 9 à 11, où, lorsqu'il est déterminé qu'un ou plusieurs paquets de la séquence de paquets est mis en mémoire-tampon pour transmission devant le paquet de reprise (1006), la station de base (B) est adaptée à identifier les un ou plusieurs paquets mis en mémoire-tampon pour transmission qui incluent au moins une valeur qui est similaire à au moins une valeur du paquet de reprise.

13. Un serveur vidéo (V) pour transmettre un flux de données dans un réseau sans fil, le serveur vidéo (V) étant adapté à :
transmettre, à une station de base (B), un flux de données comprenant une séquence de paquets (1102) ;
déterminer que le flux de données doit être repris (1104) ;
indiquer un paquet de la séquence de paquets comme étant un paquet de reprise (1106) ; et
transmettre, à la station de base (B), le paquet de reprise et au moins un paquet dans la séquence de paquets qui suit le paquet de reprise (1108).

14. Le serveur vidéo (V) de la revendication 13, où, lorsque le paquet de la séquence de paquets est indiqué comme étant un paquet de reprise (1106), le serveur vidéo est adapté à transmettre, à un nœud de réseau, un message indiquant que le paquet est le paquet de reprise.

15. Le serveur vidéo (V) de la revendication 13 ou de la revendication 14, adapté à recevoir, de la station de base (B), un message accusant réception du fait que la station de base a reçu le flux de données comprenant la séquence de paquets, et où le fait de déterminer que le flux de données doit être repris est basé sur un instant auquel le message est reçu.
